(19) Europäisches Patentamt
European Patent Office
Office européen des brevets

(11) EP 3 561 250 A1

(12) EUROPEAN PATENT APPLICATION
published in accordance with Art. 153(4) EPC

(43) Date of publication:
30.10.2019 Bulletin 2019/44

(51) Int Cl.:
F01N 3/28 (2006.01)          B01D 53/94 (2006.01)
B01J 33/00 (2006.01)         B01J 35/06 (2006.01)

(21) Application number: 17889120.6

(22) Date of filing: 30.11.2017

(86) International application number:
PCT/JP2017/043109

(87) International publication number:
WO 2018/123430 (05.07.2018 Gazette 2018/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 26.12.2016 JP 2016250632

(71) Applicant: Nichias Corporation
Tokyo 104-8555 (JP)

(72) Inventors:
• NAKAMURA Hiroki
  Tokyo 104-8555 (JP)
• TAKEDA Yuki
  Tokyo 104-8555 (JP)

(74) Representative: Müller-Boré & Partner
Patentanwälte PartG mbB
Friedenheimer Brücke 21
80639 München (DE)

(54) RETENTION MEMBER FOR EXHAUST GAS PROCESSING DEVICE AND EXHAUST GAS PROCESSING DEVICE

(57) Provided is a holding material for an exhaust gas treatment apparatus having excellent heat resistance, excellent initial contact pressure, and excellent holding property which ensures that a high contact pressure can be maintained even after repeated compression, and thus a holding ability can be effectively maintained even in long time use.

The holding material for an exhaust gas treatment apparatus is arranged in a gap between an exhaust gas treatment material and a casing containing the exhaust gas treatment material, and is in the form of a wet molded product containing inorganic fibers and having a weight per unit area of 1600 to 3000 g/m$^2$ and a bulk density of 0.125 to 0.205 g/cm$^3$.

[Figure 1]

EP 3 561 250 A1

**Description**

[Technical Field]

The present invention relates to a holding material for an exhaust gas treatment apparatus and an exhaust gas treatment apparatus.

[Background Art]

Vehicles such as automobiles have been equipped with various exhaust gas treatment apparatuses for removing harmful components such as carbon monoxide, hydrocarbon and nitrogen oxide which are contained in exhaust gas from engines of the vehicles.

Such exhaust gas treatment apparatuses normally have a structure in which a casing is provided somewhere in an exhaust pipe connected to an exhaust gas manifold of an engine, and an exhaust gas treatment material having a large number of micropores is disposed in the casing.

Examples of the exhaust gas treatment apparatuses include exhaust gas purifying catalytic converters and diesel particulate filters (DPFs). As the exhaust gas treatment materials, exhaust gas treatment materials made of ceramics are known besides those made of metal or alloy, and as the exhaust gas treatment materials made of ceramics, honeycomb filters made of cordierite are known.

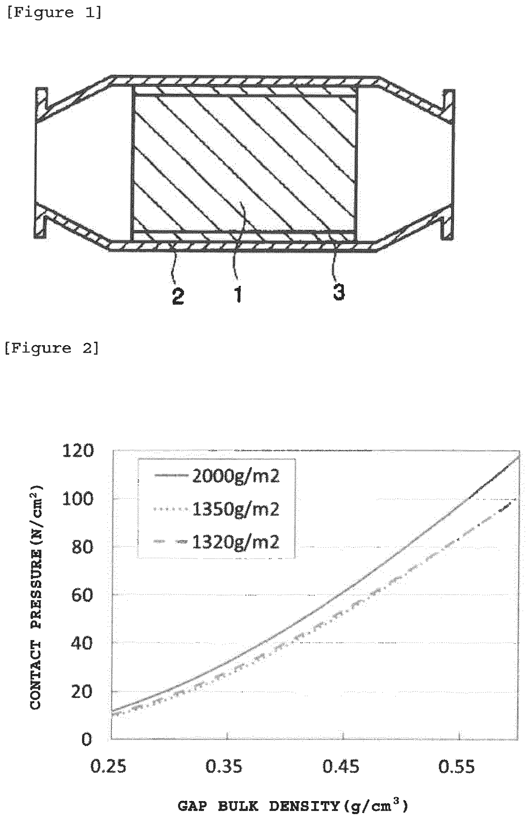

When the exhaust gas treatment apparatus is a catalytic converter, the catalytic converter generally includes a tubularly formed catalyst carrier 1 (corresponding to an exhaust gas treatment material), a casing 2 made of metal, which contains the catalyst carrier 1, and a holding material 3 attached to the catalyst carrier 1 and interposed in a gap between the catalyst carrier 1 and the casing 2, as shown in a sectional view in Figure 1.

Since the catalyst carrier 1 is generally one in which a noble metal catalyst or the like is carried on, for example, a cylindrical honeycomb-shaped molded product formed of cordierite or the like, the holding material 3 interposed in a gap between the catalyst carrier 1 and the casing 2 is required to have high-temperature heat resistance, and have both a function of safely holding the catalyst carrier 1 so as to prevent the catalyst carrier 1 from being broken by colliding against the casing 2 due to vibration or the like in running of the automobile and a function of sealing a gap between the catalyst carrier 1 and the casing 2 so as to prevent leakage of unpurified exhaust gas from the gap (see, for example, Patent Literature 1 (Japanese Patent Laid-Open No. 2003-286837)).

Thus, as holding materials for holding an exhaust gas treatment material, materials have come to be proposed which are obtained by assembling ceramic fibers such as alumina fibers alone or a mixture thereof into a mat shape with a predetermined thickness.

[Citation List]

[Patent Literature]

[Patent Literature 1]
Japanese Patent Laid-Open No. 2003-286837

[Summary of Invention]

[Technical Problem]

A holding material for folding an exhaust gas treatment material as described above is required to have a certain contact pressure for holding the exhaust gas treatment material at a predetermined position.

For this reason, an attempt has been made to improve the gap bulk density (packing density, density (g/cm$^3$) in a compressed state in arrangement) of a mat material by using as a holding material a mat material formed of ceramic fibers such as alumina fibers. However, while it is necessary to use a large amount of a mat material having a high weight per unit area for improving the gap bulk density of the mat material, alumina fibers or the like are expensive, and therefore costs are apt to be increased due to an increase in gap bulk density of the mat material.

In addition, since high-temperature exhaust gas passes through the inside of the exhaust gas treatment material, there are cases where the holding material is thermally degraded, so that the contact pressure decreases, and thus it is difficult to sufficiently exhibit a holding function.

Thus, an object of the present invention is to provide a holding material for an exhaust gas treatment apparatus having excellent heat resistance, an excellent initial contact pressure, and an excellent holding property which ensures that a high contact pressure can be maintained even after repeated compression, and thus a holding ability can be effectively maintained even in long time use; and an exhaust gas treatment apparatus.

[Solution to Problem]

For achieving the above-described object, the present inventors have extensively conducted studies, and resultantly found that the above-described technical problem can be solved by a holding material for an exhaust gas treatment apparatus arranged in a gap between an exhaust gas treatment material and a casing containing the exhaust gas treatment material, the holding material for an exhaust gas treatment apparatus in the form of a wet molded product containing inorganic fibers and having a weight per unit area of 1600 to 3000 $g/m^2$ and a bulk density of 0.125 to 0.205 $g/cm^3$. The present invention has been completed on the basis of these findings.
Specifically, the present invention provides:

(1) a holding material for an exhaust gas treatment apparatus, arranged in a gap between an exhaust gas treatment material and a casing containing the exhaust gas treatment material, the holding material in the form of a wet molded product containing inorganic fibers and having a weight per unit area of 1600 to 3000 $g/m^2$ and a bulk density of 0.125 to 0.205 $g/cm^3$;
(2) the holding material for an exhaust gas treatment apparatus according to (1), wherein the wet molded product has a thickness of 6 to 25 mm;
(3) an exhaust gas treatment apparatus comprising an exhaust gas treatment material, and a casing containing the exhaust gas treatment material, the exhaust gas treatment apparatus having a holding material for an exhaust gas treatment apparatus arranged in a state compressed to a gap bulk density of 0.20 to 0.60 $g/cm^3$ in a gap between the exhaust gas treatment material and the casing containing the exhaust gas treatment material, the holding material in the form of a wet molded product containing inorganic fibers and having a weight per unit area of 1600 to 3000 $g/m^2$ and a bulk density of 0.125 to 0.205 $g/cm^3$; and
(4) the exhaust gas treatment apparatus according to (3), wherein the wet molded product in the compressed state has a thickness of 1 to 12 mm.

[Advantageous Effect of Invention]

According to the present invention, it is possible to provide a holding material for an exhaust gas treatment apparatus having excellent heat resistance, an excellent initial contact pressure, and an excellent holding property which ensures that a high contact pressure can be maintained even after repeated compression, and thus a holding ability can be effectively maintained even in long time use, and it is also possible to provide an exhaust gas treatment apparatus in which such a holding material for an exhaust gas treatment apparatus is arranged.

[Brief Description of Drawings]

Figure 1 is a sectional view schematically showing an example of a catalytic converter to which a holding material for a catalytic converter is attached.
Figure 2 shows results of measurement of the initial pressures of holding materials obtained in Example and Comparative Examples.
Figure 3 shows results of measurement of contact pressure residual ratios in repeated compression of the holding materials obtained in Example and Comparative Examples.

[Description of Embodiment]

First, a holding material for an exhaust gas treatment apparatus according to the present invention will be described.
The holding material for an exhaust gas treatment apparatus according to the present invention is a holding material for an exhaust gas treatment apparatus, arranged in a gap between an exhaust gas treatment material and a casing containing the exhaust gas treatment material, the holding material in the form of a wet molded product containing inorganic fibers and having a weight per unit area of 1600 to 3000 $g/m^2$ and a bulk density of 0.125 to 0.205 $g/cm^3$.
The holding material for an exhaust gas treatment apparatus is in the form of a wet molded product containing inorganic fibers.
The inorganic fibers contained in the wet product function as skeletal fibers constituting the wet molded product, and the inorganic fiber may be, for example, at least one selected from the group consisting of an alumina fiber, a mullite fiber, an alumina silicate fiber, a silica fiber and a biosoluble fiber.

In the holding material for an exhaust gas treatment apparatus according to the present invention, the alumina fiber means an amorphous fiber or a polycrystalline fiber containing alumina ($Al_2O_3$) as a main component, and is favorably one containing 90 to 99 mass% of $Al_2O_3$ and 1 to 10 mass% of $SiO_2$, more favorably one containing 95 to 99 mass% of $Al_2O_3$ and 1 to 5 mass% of $SiO_2$, still more favorably one containing 96 to 99 mass% of $Al_2O_3$ and 1 to 4 mass% of $SiO_2$.

In the holding material for an exhaust gas treatment apparatus according to the present invention, the mullite fiber means an amorphous fiber or a polycrystalline fiber containing alumina ($Al_2O_3$) and silica ($SiO_2$) as main components, and is favorably one containing 60 to 90 mass% of $Al_2O_3$ and 10 to 40 mass% of $SiO_2$, more favorably one containing 70 to 85 mass% of $Al_2O_3$ and 15 to 30 mass% of $SiO_2$, still more favorably one containing 72 to 80 mass% of $Al_2O_3$ and 20 to 28 mass% of $SiO_2$.

In the holding material for an exhaust gas treatment apparatus according to the present invention, the alumina silicate fiber means an amorphous fiber or a polycrystalline fiber containing alumina ($Al_2O_3$) and silica ($SiO_2$) as main components, and is favorably one containing 30 to 60 mass% of $Al_2O_3$ and 40 to 70 mass% of $SiO_2$, more favorably one containing 35 to 60 mass% of $Al_2O_3$ and 40 to 65 mass% of $SiO_2$, still more favorably one containing 40 to 60 mass% of $Al_2O_3$ and 40 to 60 mass% of $SiO_2$.

In the holding material for an exhaust gas treatment apparatus according to the present invention, the silica fiber means an amorphous fiber or a polycrystalline fiber containing silica ($SiO_2$) as a main component, and is favorably one containing 1 to 20 mass% of $Al_2O_3$ and 80 to 99 mass% of $SiO_2$, more favorably one containing 1 to 10 mass% of $Al_2O_3$ and 90 to 99 mass% of $SiO_2$, still more favorably one containing 1 to 5 mass% of $Al_2O_3$ and 95 to 99 mass% of $SiO_2$.

In the holding material for an exhaust gas treatment apparatus according to the present invention, the biosoluble fiber is not particularly limited as long as it is an inorganic fiber soluble (degradable) in organisms, and examples of the biosoluble fiber may include artificial amorphous inorganic fibers that are made soluble in organisms.

In the holding material for an exhaust gas treatment apparatus according to the present invention, the inorganic fibers constituting the wet molded product have an average length of preferably 0.01 to 100 mm, more preferably 0.05 to 50 mm, still more preferably 0.1 to 10 mm.

The average length of the skeletal fibers means an arithmetic average of lengths of 100 skeletal fibers as measured under an optical microscope.

The wet molded product constituting the holding material for an exhaust gas treatment apparatus according to the present invention is preferably one prepared by appropriately drying a wet molded product obtained by a wet production method, where fibers including inorganic fibers are arranged in one direction or in such a manner as to cross one another alternately.

In the holding material for an exhaust gas treatment apparatus according to the present invention, the wet molded product contains inorganic fibers in an amount of preferably 60 to 99.9 parts by mass, more preferably 70 to 99 parts by mass, still more preferably 75 to 99 parts by mass in a dry state.

When the holding material for an exhaust gas treatment apparatus according to the present invention contains inorganic fibers at a ratio as described above, excellent heat resistance and durability can be easily exhibited.

As long as the effect of the present invention is exhibited, the holding material for an exhaust gas treatment apparatus according to the present invention may further contain, in the wet molded product, at least one binder selected from the group consisting of an organic binder and an inorganic binder, etc., as necessary, in addition to the inorganic fibers.

In the holding material for an exhaust gas treatment apparatus according to the present invention, the content of the binder in the wet molded product is suitably 0 to 20 mass%, more suitably 1 to 15 mass%, still more suitably 2 to 12 mass% in a dry state.

In the holding material for an exhaust gas treatment apparatus according to the present invention, the wet molded product has a weight per unit area of 1600 to 3000 g/m$^2$, preferably 1700 to 2500 g/m$^2$, more preferably 1800 to 2200 g/m$^2$.

In addition, in the holding material for an exhaust gas treatment apparatus according to the present invention, the wet molded product has a bulk density of 0.125 to 0.205 g/cm$^3$, preferably 0.135 to 0.195 g/cm$^3$, more preferably 0.145 to 0.185 g/cm$^3$.

When the weight per unit area and the bulk density of the wet molded product constituting the holding material for an exhaust gas treatment apparatus according to the present invention each fall within a range as described above, the holding material for an exhaust gas treatment apparatus has excellent heat resistance and an excellent initial contact pressure, and can exhibit an excellent holding property which ensures that a high contact pressure is developed even after repeated compression, and thus a holding ability can be effectively maintained even in long time use.

A holding material for holding an exhaust gas treatment material is required to have a certain contact pressure for holding the exhaust gas treatment material at a predetermined position, and it has been recognized that improvement of the gap bulk density (density (g/cm$^3$) in a compressed state in arrangement) of a mat material constituting a holding material is necessary for improving the contact pressure.

However, as a result of conducting studies, the present inventors have found that the contact pressure of a holding material does not necessarily depend only on the gap bulk density of a mat material constituting the holding material, and that when arranged in a state compressed in a gap between an exhaust gas treatment material and a casing containing the exhaust gas treatment material, a holding material in the form of a wet molded product containing inorganic fibers and having a predetermined bulk density and a predetermined weight per unit area has a higher initial contact pressure, and can exhibit a superior contact pressure even after repeated compression in comparison with other holding materials even at the same gap bulk density (density ($g/cm^3$) in a compressed state in arrangement), e.g. a mat material which is in the form of a wet molded product containing inorganic fibers and having a bulk density of 0.167 $g/cm^3$ and a weight per unit area of 2000 $g/m^2$ and which is packed at a gap bulk density of 0.4 $g/cm^3$ has a higher initial contact pressure, and can exhibit a superior contact pressure even after repeated compression in comparison with a mat material which is in the form of a wet molded product having a bulk density of 0.165 $g/cm^3$ and a weight per unit area of 1320 $g/m^2$ and which is packed at a gap bulk density of 0.4 $g/cm^3$. Consequently, the present invention has been completed.

Although the reason why the holding material for an exhaust gas treatment apparatus according to the present invention has a higher initial contact pressure, and can exhibit a superior contact pressure even after repeated compression in comparison with other holding materials even at the same gap bulk density (density ($g/cm^3$) in a compressed state in arrangement) is not necessarily evident, it is considered that a wet molded product constituting the holding material for an exhaust gas treatment apparatus according to the present invention has a higher weight per unit area in comparison with inorganic fiber assemblies that are normally used for the purpose concerned, and as the weight per unit area becomes higher, the number of fibers increases, resulting in contribution to exhibition of an excellent contact pressure. Since the contact pressure is exhibited by a repulsive force of intersections of fibers during compression of a holding material, the contact pressure increases as the number of intersections of fibers becomes larger. It is therefore considered that the contact pressure is improved as the number of fibers increases.

Since the holding material for an exhaust gas treatment apparatus according to the present invention has a higher initial contact pressure, and can exhibit a superior contact pressure even after repeated compression in comparison with other holding materials even at the same gap bulk density (density ($g/cm^3$) in a compressed state), the amount of the holding material used (area or volume of the holding material used) can be reduced, which means that a contact pressure comparable to the contact pressure of other holding materials can be exhibited with a smaller amount of the holding material used.

In the holding material for an exhaust gas treatment apparatus according to the present invention, the wet molded product has a thickness (thickness in a non-compressed state) of preferably 6 to 25 mm, more preferably 8 to 20 mm, still more preferably 9 to 15 mm.

When the thickness of the wet molded product falls within a range as described above, the holding material for an exhaust gas treatment apparatus according to the present invention can be effectively used as a holding material for an exhaust gas treatment apparatus, and it is possible to improve the initial contact pressure, and exhibit an excellent contact pressure even after repeated compression.

The wet molded product constituting the holding material for an exhaust gas treatment apparatus according to the present invention has a thickness of preferably 1 to 12 mm, more preferably 2 to 10 mm, still more preferably 2.5 to 8 mm in a compressed state at the time of using the wet molded product (in arrangement of the wet molded product in a gap between an exhaust gas treatment material and a casing containing the exhaust gas treatment material).

When the thickness of the wet molded product in compressed state at the time of using the wet molded product falls within a range as described above, the holding material for an exhaust gas treatment apparatus according to the present invention can be effectively used as a holding material for an exhaust gas treatment apparatus, and it is possible to improve the initial contact pressure, and exhibit an excellent contact pressure after repeated compression.

The shape of the wet molded product constituting the holding material for an exhaust gas treatment apparatus according to the present invention is not particularly limited, and may be a plate shape or a sheet shape, or a shape corresponding to the outer shape of an exhaust gas treatment material to be arranged, such as a catalyst carrier.

Next, a favorable method for producing a wet molded product constituting the holding material for an exhaust gas treatment apparatus according to the present invention will be described.

Examples of the method for producing a wet molded product constituting the holding material for an exhaust gas treatment apparatus according to the present invention may include a method in which an aqueous slurry containing inorganic fibers is subjected to suction-dehydration molding or sheet formation to obtain a wetted molded product (hereinafter, referred to as "method A for production of wet molded product").

In method A for production of wet molded product, details of inorganic fibers are as described above.

In method A for production of wet molded product, the inorganic fibers are added in an aqueous solvent, and further, a binder such as an organic binder may be added in the solvent for forming an aqueous slurry.

The organic binder may be at least one selected from the group consisting of starch, a polymer coagulant, pulp and an appropriate emulsion.

In method A for production of wet molded product, the type and the amount of the organic binder added in the solvent may be appropriately selected for formation of a flock having a desired size.

The organic binder may be added in the aqueous solvent in the form of a solid, or in the form of a suspension liquid, a solution or the like.

In method A for production of wet molded product, the aqueous slurry contains the organic binder in an amount of preferably 0 to 20 parts by mass, more preferably 1 to 15 parts by mass, still more preferably 2 to 112 parts by mass based on 100 parts by mass of the total of inorganic fibers contained in the aqueous slurry.

Method A for production of wet molded product ensures, by using the organic binder, that a material is aggregated into a flock in a slurry, so that the resulting dehydration-molded product or sheet can be brought into a low-density and high-volume structure to impart sufficient elasticity while sufficient flexural strength is imparted to the resulting dehydration-molded product or sheet.

In method A for production of wet molded product, the solvent used in formation of a slurry is not particularly limited, and examples thereof include water and polar organic solvents.

Examples of the water may include distilled water, ion-exchanged water, city water, ground water and industrial water, and examples of the polar organic solvent may include monohydric alcohols such as ethanol and propanol, and dihydric alcohols such as ethylene glycol. Among them, water is preferable as the solvent because it does not deteriorate the work environment and place loads on the environment.

The concentration of the total solid contained in the slurry is preferably 0.05 to 5 mass%, more preferably 0.1 to 2 mass%, still more preferably 0.2 to 1 mass%. When the concentration of the total solid contained in the slurry is less than 0.05 mass%, production efficiency is apt to be reduced because the amount of an aqueous medium removed in a dehydration molding or sheet formation step is excessively large, and when the concentration of the total solid contained in the slurry is more than 5 mass%, it is difficult to uniformly disperse the solid in the slurry.

In method A for production of wet molded product, the slurry is subjected to dehydration molding or sheet formation to obtain a wetted molded product.

The hydration molding method is not particularly limited, and a known method can be employed, and examples thereof may include a suction-dehydration molding method in which a slurry is poured into a mold with a net placed on a bottom thereof, and a solvent is suctioned; and a pressure-dehydration molding method.

In the present application, a solvent other than water may be used in formation of an aqueous slurry, but dehydration molding includes molding which involves removal of a solvent other than water.

The sheet formation method is not particularly limited, and a known method can be employed, and examples thereof may include a flow-on method in which a slurry is caused to flow out from a flow box onto a belt-shaped porous carrier; and methods capable of continuously forming a slurry into a sheet, such as a cylinder-type sheet formation method and a Fourdrinear sheet formation method.

At the time when an aqueous slurry prepared in a stirring tank or the like is carried into a mold, a storage tank or the like for performing the dehydration molding or sheet formation, in method A for production of wet molded product, the aqueous slurry may be gravitationally transferred, for example, with the mold, storage tank or the like disposed below the stirring tank, or the aqueous slurry may be transferred by using a pump or the like.

The wetted molded product is suitably one having a shape similar to that of a holding material for an exhaust gas treatment apparatus to be obtained, and the shape of the wet molded product may be, for example, a plate shape, a sheet shape, or a shape corresponding to the outer shape of a catalyst carrier. Here, in the production process, the wetted molded product may be pressed as necessary so that the bulk density as a quality is kept within a certain range.

For example, when a holding material to be obtained is in the form of a tube, the slurry may be subjected to suction-dehydration molding using a cylindrical mesh member (e.g. cylindrical wire net), and appropriately dried as described below, followed by removing the cylindrical mesh member.

The wetted molded product obtained by the method described above is appropriately dried.

The drying may be natural drying, but it is preferable to dry (heat) the wet molded product with a known dryer, and the drying temperature is preferably 100 to 250°C, more preferably 150 to 220°C, still more preferably 170 to 200°C. The drying time is preferably 5 to 60 minutes, more preferably 6 to 40 minutes, still more preferably 7 to 30 minutes.

In method A for production of wet molded product, processing such as punching may be further performed as necessary to prepare a wetted molded product or a dried product having a desired shape.

For obtained a wet molded product having a weight per unit area of 1600 to 3000 g/m$^2$ and a bulk density of 0.125 to 0.205 g/cm$^3$, in method A for production of wet molded product, it is preferable that under the above-described conditions, particularly without changing the concentration of a slurry to be molded (put in a molding tank or the like), the slurry amount be made larger than a normally employed slurry amount.

In this way, a holding material for an exhaust gas treatment apparatus in the form of a target wet molded product can be obtained.

Next, modes of use of the holding material for an exhaust gas treatment apparatus according to the present invention will be described.

Examples of exhaust gas treatment apparatuses in which the holding material according to the present invention is arranged include exhaust gas purifying catalytic converters and diesel particulate filters (DPFs).

For example, when the holding material for an exhaust gas treatment apparatus is a holding material for a catalytic converter, and a cylindrical catalyst carrier is used, a holding material including the wet molded product (a wetted molded product or a dried product of the wetted molded product) is appropriately wound around the periphery of the cylindrical catalyst carrier, the cylindrical catalyst carrier is then put in a casing lower part obtained by cutting a tubular casing in half, a casing upper part obtained by cutting the tubular casing in half is then superposed on the casing lower part while the holding material is pressed, and the casing upper part and the casing lower part are bonded to each other with a bolt or the like to prepare a tubular product, whereby the holding material for an exhaust gas treatment apparatus according to the present invention can function as a holding material for a catalytic converter.

For example, when the holding material for an exhaust gas treatment apparatus is a holding material for a catalytic converter, and a cylindrical catalyst carrier is used, a holding material including the wet molded product (a wetted molded product or a dried product of the wetted molded product) is appropriately wound around the periphery of the cylindrical catalyst carrier to prepare a roll, and the roll is pressed and inserted into a tubular casing at an end thereof, whereby the holding material for an exhaust gas treatment apparatus according to the present invention can function as a holding material for a catalytic converter.

When the wetted molded product is used as the holding material, the wetted molded product is arranged in a gap between a catalyst carrier and a casing containing the catalyst carrier to provide a form corresponding to a catalytic converter, and with the wetted molded product arranged in an automobile, the engine is driven, whereby heating of the wetted molded product can be performed.

According to the present invention, it is possible to provide a holding material for an exhaust gas treatment apparatus having excellent heat resistance, an excellent initial contact pressure, and an excellent holding property which ensures that a high contact pressure can be exhibited even after repeated compression, and thus a holding ability can be effectively maintained even in long time use.

Next, an exhaust gas treatment apparatus according to the present invention will be described.

The exhaust gas treatment apparatus according to the present invention comprises an exhaust gas treatment material, and a casing containing the exhaust gas treatment material, the exhaust gas treatment apparatus having a holding material for an exhaust gas treatment apparatus arranged in a state compressed to a gap bulk density of 0.20 to 0.60 g/cm$^3$ in a gap between the exhaust gas treatment material and the casing containing the exhaust gas treatment material, the holding material in the form of a wet molded product containing inorganic fibers and having a weight per unit area of 1600 to 3000 g/m$^2$ and a bulk density of 0.125 to 0.205 g/cm$^3$.

The exhaust gas treatment apparatus according to the present invention is prepared by arranging the holding material for an exhaust gas treatment apparatus according to the present invention, and details of the holding material for an exhaust gas treatment apparatus according to the present invention are as described above.

Examples of the exhaust gas treatment apparatus according to the present invention include exhaust gas purifying catalytic converters and diesel particulate filters (DPFs).

The exhaust gas treatment material constituting the exhaust gas treatment apparatus according to the present invention may include catalyst carriers, which may be made of any of metal, alloy and ceramics.

The catalyst carrier is not particularly limited, and can be selected from carriers which carry known exhaust gas purifying catalysts, and examples thereof may include catalyst carriers in which a noble metal catalyst or the like is carried on a cylindrical honeycomb-shaped molded product formed of cordierite or the like. In addition, the form of the catalyst carrier is not particularly limited, and example thereof may include a cylindrical shape.

The casing which contains an exhaust gas treatment material constituting the exhaust gas treatment apparatus according to the present invention is not particularly limited as long as it can contain therein an exhaust gas treatment material and a holding material for an exhaust gas treatment apparatus.

The form of the casing is not particularly limited, but a casing having a shape corresponding to the shape of an exhaust gas treatment material is preferable, and for example, when the exhaust gas treatment material has a cylindrical shape, the shape of the casing is preferably a cylindrical shape.

The constituent material of the casing is not particularly limited as long as it has desired heat resistance, and the constituent material of the casing is appropriately selected from known materials, and normally, appropriately selected from materials made of metals such as stainless steel and iron.

In the exhaust gas treatment apparatus according to the present invention, the wet molded product constituting the holding material for an exhaust gas treatment apparatus according to the present invention has a thickness of preferably 1 to 12 mm, more preferably 2 to 10 mm, still more preferably 2.5 to 8 mm in a state compressed in a gap between the exhaust gas treatment material and the casing containing the exhaust gas treatment material.

When in the exhaust gas treatment apparatus according to the present invention, the holding material for an exhaust gas treatment apparatus in the form of a predetermined wet molded product according to the present invention is employed as a holding material, and the thickness of the wet molded product in a compressed state at the time of using the wet molded material falls within a range as described above, excellent heat resistance can be exhibited, and it is possible to improve the initial contact pressure, and easily develop a high contact pressure even after repeated compression.

The method for producing the exhaust gas treatment apparatus according to the present invention is not particularly limited.

For example, when the exhaust gas treatment apparatus is a catalytic converter, the holding material for an exhaust gas treatment apparatus according to the present invention is appropriately wound around the periphery of a cylindrical catalyst carrier which is an exhaust gas treatment material, the catalyst carrier wound with the holding material is then put in a casing lower part obtained by cutting a tubular casing in half, a casing upper part obtained by cutting the tubular casing in half is then superposed on the casing lower part while the holding material wound around the periphery of the catalyst carrier is pressed, and the casing upper part and the casing lower part are bonded to each other with a bolt or the like to prepare a tubular product, whereby the exhaust gas treatment apparatus according to the present invention can be produced.

For example, when the holding material for an exhaust gas treatment apparatus is a holding material for a catalytic converter, and a cylindrical catalyst carrier is used, a holding material including the wet molded product (a wetted molded product or a dried product of the wetted molded product) is appropriately wound around the periphery of the cylindrical catalyst carrier to prepare a roll, and the roll is pressed and inserted into a tubular casing at an end thereof, whereby the exhaust gas treatment apparatus according to the present invention can be produced.

Examples of the exhaust gas treatment apparatus in which the holding material according to the present invention is arranged include exhaust gas purifying catalytic converters and diesel particulate filters (DPFs).

According to the present invention, it is possible to provide an exhaust gas treatment apparatus including a holding material for an exhaust gas treatment apparatus having excellent heat resistance, an excellent initial contact pressure, and an excellent holding property which ensures that a high contact pressure can be exhibited even after repeated compression, and thus a holding ability can be effectively maintained even in long time use.

Hereinafter, the present invention will be described in further detail by way of Examples and Comparative Examples, but the present invention is in no way limited by the following examples.

(Example 1)

1. Preparation of holding material for catalytic converter

100 parts by mass of alumina fibers (having an $Al_2O_3$ content of 96 mass% and a $SiO_2$ content of 4 mass%) as inorganic fibers, and 10 parts by mass of an acrylic resin as an organic binder were dispersed in water to prepare an aqueous slurry (solid concentration: 10 mass%).

The aqueous slurry was then poured into a dehydration mold having a wire net on the bottom thereof, and subjected to dehydration molding to obtain a wetted molded product, and the whole of the obtained wetted molded product was dried at 185°C for 20 minutes while the wetted molded product was compressed so as to have a uniform thickness. In this way, a holding material for a catalytic converter (having a thickness of 12 mm, a weight per unit area of 2000 $g/m^2$ and a bulk density of 0.167 $g/cm^3$) in the form of a wet molded product was obtained.

(Measurement of initial contact pressure)

The holding material for a catalytic converter obtained in "1. Preparation of holding material for catalytic converter" was cut into a circular shape having a diameter of 50.8 mm, and heated and fired at 700°C for 1 hour to prepare a test piece, followed by measuring an initial contact pressure with the gap bulk density GBD (density in a compressed state) changed over a range of 0.25 $g/cm^3$ to 0.60 $g/cm^3$ by applying pressure to the obtained test piece at a rate of 1 mm/minute using a universal tester (AUTOGRAPH manufactured by Shimadzu Corporation). The results are shown in Figure 2.

(Measurement of contact pressure after repeated compression)

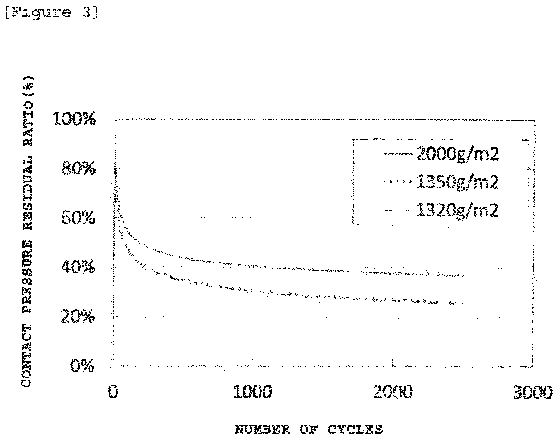

The holding material for a catalytic converter obtained in "1. Preparation of holding material for catalytic converter" was cut into a circular shape having a diameter of 50.8 mm, and heated and fired at 700°C for 1 hour to prepare a test piece, and the obtained test piece was then compressed at a rate of 10 mm/minute to a gap bulk density (density in a compressed state) of 0.4 $g/cm^3$ using a universal tester (AUTOGRAPH manufactured by Shimadzu Corporation). The test piece was then released by a thickness of 0.5 mm at a rate of 10 mm/minute. Further, the cycle consisting of compression and releasing was repeated 2500 times, and a contact pressure at the time of releasing in each cycle was measured, and a contact pressure residual ratio (%) was calculated in accordance with the following equation. The results are shown in Figure 3.

$$\texttt{Contact pressure residual rate (\%) = (contact}$$

$$\texttt{pressure at the time of releasing in each cycle / contact}$$

$$\texttt{pressure at the time of releasing in first cycle)} \times \texttt{100}$$

(Comparative Example 1)

Except that with respect to "1. Preparation of holding material for catalytic converter" in Example 1, the time during which the wetted molded product was dried while being compressed (hot pressing time) was changed to 13 minutes, the same process as in Example 1 was carried out to obtain a holding material for a catalytic converter (having a thickness of 9.3 mm, a weight per unit area of 1350 $g/m^2$ and a bulk density of 0.145 $g/cm^3$) in the form of a wet molded product was obtained.

In addition, using the holding material for a catalytic converter, an initial contact pressure and a change in contact pressure after repeated compression (contact pressure residual ratio (%)) were measured by the same method as in Example 1.

The results are shown in Figures 2 and 3.

(Comparative Example 2)

Except that with respect to "1. Preparation of holding material for catalytic converter" in Example 1, the time during which the wetted molded product was dried while being compressed (hot pressing time) was changed to 11.5 minutes, the same process as in Example 1 was carried out to obtain a holding material for a catalytic converter (having a thickness of 8.0 mm, a weight per unit area of 1320 $g/m^2$ and a bulk density of 0.165 $g/cm^3$) in the form of a wet molded product was obtained.

In addition, using the holding material for a catalytic converter, an initial contact pressure and a change in contact pressure after repeated compression (contact pressure residual ratio (%)) were measured by the same method as in Example 1.

The results are shown in Figures 2 and 3.

As shown in Figures 2 and 3, it is apparent that the holding material for a catalytic converter obtained in Example 1, which has a predetermined weight per unit area and bulk density, has a high initial contact pressure and a high release contact pressure after repeated compression (contact pressure residual ratio (%). Therefore, it is apparent that the holding material for a catalytic converter has excellent heat resistance, and can exhibit an excellent holding property which ensures that a predetermined initial contact pressure and a holding ability in long time use involving heating and cooling can be effectively maintained even with a small amount of the holding material.

On the other hand, as shown in Figures 2 and 3, the holding materials for a catalytic converter obtained in Comparative Examples 1 and 2, whose weights per unit area are outside a predetermined range, have a lower contact pressure and a lower release contact pressure after repeated compression (contact pressure residual ratio (%)) in comparison with the holding material for a catalytic converter obtained in Example 1, even at the same gap bulk density GBD ($g/cm^3$).

[Industrial Applicability]

According to the present invention, it is possible to provide a holding material for an exhaust gas treatment apparatus having excellent heat resistance, an excellent initial contact pressure, and an excellent holding property which ensures that a high contact pressure can be maintained even after repeated compression, and thus a holding ability can be effectively maintained even in long time use, and it is also possible to provide an exhaust gas treatment apparatus in which such a holding material for an exhaust gas treatment apparatus is arranged.

[Reference Signs List]

1   Catalyst carrier

2    Casing

3    Holding material

**Claims**

1.  A holding material for an exhaust gas treatment apparatus, arranged in a gap between an exhaust gas treatment material and a casing containing the exhaust gas treatment material,
    the holding material in the form of a wet molded product containing inorganic fibers and having a weight per unit area of 1600 to 3000 g/m$^2$ and a bulk density of 0.125 to 0.205 g/cm$^3$.

2.  The holding material for an exhaust gas treatment apparatus according to claim 1, wherein the wet molded product has a thickness of 6 to 25 mm.

3.  An exhaust gas treatment apparatus comprising an exhaust gas treatment material, and a casing containing the exhaust gas treatment material,
    the exhaust gas treatment apparatus having a holding material for an exhaust gas treatment apparatus arranged in a state compressed to a gap bulk density of 0.20 to 0.60 g/cm$^3$ in a gap between the exhaust gas treatment material and the casing containing the exhaust gas treatment material, the holding material in the form of a wet molded product containing inorganic fibers and having a weight per unit area of 1600 to 3000 g/m$^2$ and a bulk density of 0.125 to 0.205 g/cm$^3$.

4.  The exhaust gas treatment apparatus according to claim 3, wherein the wet molded product in the compressed state has a thickness of 1 to 12 mm.

[Figure 1]

[Figure 2]

[Figure 3]

## INTERNATIONAL SEARCH REPORT

| International application No. |
|---|
| PCT/JP2017/043109 |

**A. CLASSIFICATION OF SUBJECT MATTER**
Int.Cl. F01N3/28(2006.01)i, B01D53/94(2006.01)i, B01J33/00(2006.01)i,
B01J35/06(2006.01)i

According to International Patent Classification (IPC) or to both national classification and IPC

**B. FIELDS SEARCHED**

Minimum documentation searched (classification system followed by classification symbols)
Int.Cl. F01N3/28, B01D53/94, B01J33/00, B01J35/06

Documentation searched other than minimum documentation to the extent that such documents are included in the fields searched
Published examined utility model applications of Japan   1922-1996
Published unexamined utility model applications of Japan  1971-2017
Registered utility model specifications of Japan       1996-2017
Published registered utility model applications of Japan  1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2015-140678 A (IBIDEN CO., LTD.) 03 August 2015, paragraphs [0022], [0024], [0044]-[0050], [0077]-[0081], fig. 1 (Family: none) | 1-2<br>3-4 |
| Y | JP 2003-293760 A (MITSUBISHI KAGAKU SANSHI CORPORATION) 15 October 2003, paragraphs [0001]-[0007], fig. 3, 4 (Family: none) | 3-4 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 December 2017 | 26 December 2017 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003286837 A